# EUROPEAN PATENT APPLICATION

(11) **EP 1 715 306 A1**
(43) Date of publication of application: **25.10.2006**
(21) Application number: 05075946.3
(22) Date of filing: 21.04.2005
(51) Int. Cl.: G01F 25/00

(54) **Method and calibration system for calibrating a flow meter.**

(71) Applicant: Instromet International N.V., 2910 Essen (BE)
(72) Inventor: Langenberg, Cornelis Antonie, 2930 Brasschaat (BE); van Weers, Anthonius Theodorus, 4824 LN Breda (NL)
(74) Representative: Volmer, Johannes Cornelis

(57) **Abstract**

The invention relates to a calibration system and method for calibrating a flow meter, in particular a flow meter of the Coriolis type. The system comprises a first container (12) with a first plunger (16) which is displaceable therein, which divides the first container into a first space (26) for measurement fluid and a second space (24) for counterpressure fluid, and a similar second container (14), in which the plungers (16,18) thereof are connected to one another. The first spaces (26) can be coupled to one another by means of line sections (28,36) so as to be in fluid communication by insertion of the flow meter (34) to be calibrated. The second spaces (24) are in fluid communication with one another via lines (44,46) with a displacement device (48) inserted therein for displacing the two plungers in the respective containers. The system also comprises a measuring device (60) for determining the displacement, and a calculation unit for linking the displacement determined to signals emitted by the flow meter to be calibrated, a line section (54) for measurement fluid being in pressure-compensating communication with a line (50) for counterpressure fluid via pressure-compensating means (52).

## Description

The invention firstly relates to a calibration system for calibrating a flow meter.

An example of a calibration system for calibrating a flow meter, in which the displacement of a piston in a measuring cylinder is determined, is known from US Patent 4627267. With this known system, a first fluid line is provided between the inlet and outlet of a measuring cylinder, into which line the flow meter to be calibrated can be incorporated. A measuring piston is arranged in the cylinder, which measuring piston forms a fluid barrier and thus divides the cylinder into two spaces for a measurement fluid, which spaces are in communication with one another via the said first fluid line. On one side, the measuring piston is connected to an end of a piston rod. In the embodiment illustrated, the other end of the piston rod is connected to a second control piston, which is displaceable within a control cylinder. Displacement of the control piston in the control cylinder brings about a corresponding displacement of the measuring piston in the measuring cylinder. The other side of the measuring piston is connected to a measuring rod, the displacement of which can be measured. In the description it is stated that, due to the relatively small volume of the measuring cylinder, this arrangement allows the accurate control of the pressure and temperature, so that the flow meter can be calibrated under simulated practical conditions.

In some countries, vehicles are run on compressed natural gas (CNG; pressure approximately 240 bar). At filling stations therefor, the amount due is often calculated on the basis of the mass determined with a Coriolis mass flow meter. The calibration of such meters increasingly has to be carried out under simulated operating conditions, in particular with a gaseous measurement fluid, because of increasingly stringent safety requirements. However, high-pressure operating conditions result in a relatively high risk of leaks. In addition, relatively large losses of CNG occur when the meters to be tested are replaced.

It is an object of the invention to provide a calibration system for calibrating a flow meter, in particular for calibrating flow meters of the Coriolis type for use with non-critical gases such as nitrogen, helium and in particular CNG under high pressure, or at least to provide a usable alternative.

In particular, it is an object of the invention to provide a calibration system of this type in which the risk of leaks occurring is small.

It is a further object of the invention to provide a calibration system of this type having a simple configuration.

To this end, the calibration system for calibrating a flow meter, in particular a flow meter of the Coriolis type, according to the invention comprises a first container with a first plunger which is displaceable therein, which divides the first container into a first space for measurement fluid and a second space for counterpressure fluid, and a second container with a second plunger which is displaceable therein, which divides the second container into a first space for measurement fluid and a second space for counterpressure fluid, in which the plungers are connected to one another, and in which the first spaces can be coupled to one another by means of line sections so as to be in fluid communication by insertion of the flow meter to be calibrated, and the second spaces are in fluid communication with one another via a line, a displacement device for displacing the two plungers in the respective containers, a measuring device for determining the displacement of a plunger, and a calculation unit for linking the displacement determined to signals emitted by the flow meter to be calibrated, a line section for measurement fluid being in pressure-compensating communication with a line for counterpressure fluid via pressure-compensating means.

The calibration system according to the invention comprises two containers, preferably high-pressure cylinders, in both of which a displaceable plunger is arranged both said plungers being connected to one another. Advantageously, the containers with plungers are formed by identical piston-cylinder units, the pistons of which are connected to one another via a common piston rod. A piston forms a displaceable fluid-tight barrier and divides the respective container into two spaces, a first space for measurement fluid and a second space for counterpressure fluid. The first spaces are in fluid communication with one another via external line sections, when the flow meter to be calibrated is coupled between the line sections in a measurement position. Advantageously, shut-off valves are provided in the respective line sections on both sides of the measurement position, so that any losses which may occur during the replacement of the flow meters to be tested are small. The second spaces are in communication with one another via the displacement device. The measurement fluid preferably is the fluid for which the flow meter to be calibrated is used in order to establish the amount thereof in practice, more preferably a non-critical gas, in particular CNG. The displacement device is advantageously a spindle drive. The spindle drive advantageously engages on a position in the centre of the common piston rod. A hydraulic pump can also be used, advantageously in combination with heat exchangers in order to be able to dissipate the heat given off during operation. The counterpressure fluid is preferably hydraulic oil. The pistons are mechanically connected in order to balance the forces which are created during operation by the difference in pressure between the measurement fluid and the counterpressure fluid. The pressure of the counterpressure fluid itself is also compensated by the pressure-compensating means, so that the risk of counterpressure fluid leaking from the counterpressure-fluid side of the respective piston via this piston to the measuring-fluid side thereof is reduced. During operation, the displacement device sets the piston in the first container in motion (and thus, by reason of the connection between them also the piston of the second container). As a result thereof, a flow of the measurement fluid through the flow meter is also effected. The displacement is measured by means of the measuring device. At a given volume of the first container, it is thus known what amount, in particular what volume of measurement fluid, flows through the flow meter from the first space to the first space of the second container. Therefore, at a given pressure and temperature, the mass is also known. This applies in particular to non-critical gases, such as CNG, as this gas cannot be compressed to form a liquid. This amount is linked to the signals emitted by the flow meter in the calculation unit, so that the flow meter can be calibrated.

The calibration system according to the invention has a simple configuration and short changeover times.

Advantageously, pressure-compensating means are provided between a branch line downstream of the position of the flow meter to be calibrated and the displacement device.

The pressure-compensating means preferably comprise a diaphragm. Another example thereof comprises a piston or a plunger.

In a further preferred embodiment, the piston rod is provided with a displacement mark, and the measuring device is designed for detecting the displacement mark. More preferably, the displacement mark can be detected magnetically and the measuring device comprises a magnetic strip; advantageously provided with a small step size.

According to a second aspect, the invention relates to a method for calibrating a flow meter using a calibration system according to the invention, under operating conditions for which the flow meter is clearly intended, in which a flow meter to be calibrated is coupled between the line sections, the first spaces are filled with a pressurized measurement fluid, and the second spaces are filled with a counterpressure fluid, the plungers are set in motion and their displacement is measured, and the signals emitted by the flow meter to be calibrated are linked to the displacement measured in order to calibrate the flow meter, the pressure difference between the counterpressure medium and the measurement fluid being compensated. The method according to this aspect of the invention result in the same advantages as those described for the calibration system. Preferably, the flow meter to be tested is a Coriolis meter and the measurement fluid is compressed natural gas (CNG).

The invention will be explained below with reference to the single figure, which shows a diagrammatic embodiment of a calibration system according to the invention.

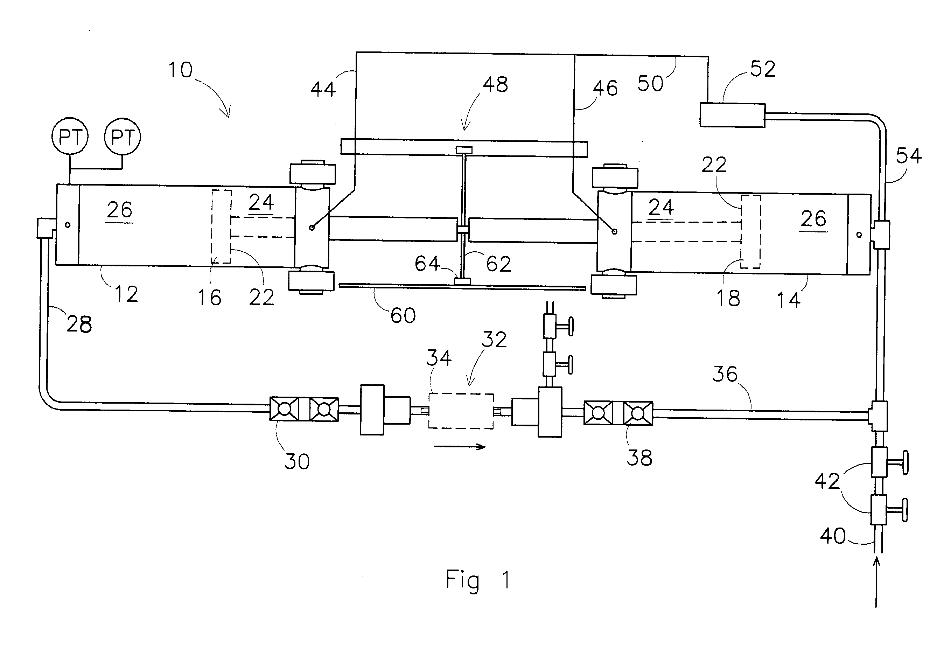

Fig. 1 shows an embodiment of a pressure-balanced calibration system for calibrating a flow meter according to the invention, which is designated overall by reference numeral 10. The system 10 comprises a first container 12 and a second container 14 as high-pressure cylinders of identical size. Plungers 16 and 18, respectively, are arranged in the containers 12, 14 which are connected to one another via piston rod 20. A plunger 16, 18 divides the volume of the respective container 12, 14 on a counterpressure-fluid side 22 into a space 24 for counterpressure fluid and on the opposite side, the measurement fluid side, into a space 26 for measurement fluid. The space 26 of the first container 12 is in communication with a measurement position 32 via a line section 28 in which a shut-off valve 30 is provided, in which measurement position a flow meter to be calibrated is arranged during testing. A line section 36, likewise provided with a shut-off valve 38, connects the position 32 to the space 26 of the second container 14. A supply line 40 provided with shut-off valves 42 is connected to the line section 36 in order to provide the system with measurement fluid from a source (not shown), for example a high-pressure cylinder filled with CNG. The counterpressure fluid spaces 24 are in communication via lines 44 and 46. A spindle drive, diagrammatically indicated and denoted by reference numeral 48 engages on the centre of the piston rod 20 and is able to displace the latter in both directions, so that the calibration device can also be used in two directions of flow. Line 46 is provided with a branch line 50 leading to the counterpressure-fluid side of a diaphragm 52, which acts as a pressure compensator. The other side of diaphragm 52 is connected to line section 36 via a branch line 54.

A measuring device 60 in the form of a magnetic strip is arranged next to the piston rod 20 in order to measure the displacement of the plungers 16, 18. To this end, the piston rod 20 is provided with a magnetically detectable displacement mark 64 at the free end of an arm 62 which is attached to the centre of the piston rod 20 thereof.

Because of the pressure-compensating connection via diaphragm 52, no oil leaks via the plungers 16, 18 during calibration, even under operating conditions for CNG applications. When the shut-off valves 30, 38 and 42 are being operated correctly, hardly any measurement fluid is lost during replacement of the flow meters.

It will be understood that a number of parallel measurement positions can be added to the embodiment described above, so that a number of flow meters can be calibrated quickly in succession and replacement of a flow meter in a measurement position can be effected during calibration of another flow meter in a parallel measuring position.

## Claims

1. Calibration system for calibrating a flow meter, in particular a flow meter of the Coriolis type, comprising a first container (12) with a first plunger (16) which is displaceable therein, which divides the first container into a first space (26) for measurement fluid and a second space (24) for counterpressure fluid, and a second container (14) with a second plunger (18) which is displaceable therein, which divides the second container (18) into a first space (26) for measurement fluid and a second space (24) for counterpressure fluid, in which the plungers (16, 18) are connected to one another, and in which the first spaces (26) can be coupled to one another by means of line sections (28, 36) so as to be in fluid communication by insertion of the flow meter (34) to be calibrated, and the second spaces (24) are in fluid communication with one another via a line (44, 46), a displacement device (48) for displacing the two plungers in the respective containers, a measuring device (60) for determining the displacement of a plunger (16, 18), and a calculation unit for linking the displacement determined to signals emitted by the flow meter to be calibrated, a line section (54) for measurement fluid being in pressure-compensating communication with a line (50) for counterpressure fluid via pressure-compensating means (52).

2. Calibration system according to claim 1, in which the pressure-compensating means (52) are provided between a branch line (50) downstream of the position of the flow meter to be calibrated and the displacement device (48).

3. Calibration system according to claim 2, in which the pressure-compensating means (52) comprise a diaphragm.

4. Calibration system according to one of the preceding claims, in which the containers (12, 14) and plungers (16, 18) are piston-cylinder units, the pistons (16, 18) of which are connected to one another by a common piston rod (20).

5. Calibration system according to one of the preceding claims, in which the piston rod (20) is provided with a displacement mark (64), and the measuring device (60) is designed for detecting the displacement mark (64).

6. Calibration system according to one of the preceding claims, in which the measuring device (60) comprises a magnetic strip.

7. Calibration system according to one of the preceding claims, in which the counterpressure fluid comprises hydraulic oil.

8. Calibration system according to one of the preceding claims, in which the displacement device (48) comprises a spindle drive.

9. Method for calibrating a flow meter (34) using a calibration system (10) according to one of the preceding claims, under operating conditions for which the flow meter is clearly intended, in which a flow meter to be calibrated is coupled between the line sections (28, 36), the first spaces (26) are filled with a pressurized measurement fluid, and the second spaces (24) are filled with a counterpressure fluid, the plungers (16, 18) are set in motion and their displacement is measured, and the signals emitted by the flow meter (34) to be calibrated are linked to the displacement measured in order to calibrate the flow meter (34), the pressure difference between the counterpressure fluid and the measurement fluid being compensated.

10. Method according to claim 9, in which the flow meter (34) is a Coriolis meter.

11. Method according to claim 9 or 10, in which the measurement fluid is compressed natural gas (CNG).
